# EUROPEAN PATENT SPECIFICATION

(11) **EP 4 550 527 B1**
(45) Date of publication and mention of the grant of the patent: **18.11.2026**
(21) Application number: 24207243.7
(22) Date of filing: 17.10.2024
(51) Int. Cl.: H01M 10/613, H01M 10/625, H01M 10/643, H01M 10/6554, H01M 10/6556, H01M 50/213

(54) **BATTERY SYSTEM**
BATTERIESYSTEM
SYSTÈME DE BATTERIE

(30) Priority: 06.11.2023 US 202318502342
(43) Date of publication of application: 07.05.2025
(73) Proprietor: Deere & Company, Moline, IL 61265 (US)
(72) Inventor: DeLorme, Daniel, Mannheim (DE); Sires, Dain, Mannheim (DE); Tong, Niannian, Mannheim (DE)
(74) Representative: Reichert, Christian

(56) References cited:
- WO-A1-2022/069910
- WO-A1-2022/235192

## Description

### BACKGROUND

Electric battery systems, including multi-cell battery packs, may be utilized to power passenger cars, trucks, buses, other automotive applications, and industrial, commercial, and/or work vehicle applications, including without limitation agricultural, construction, and turf equipment. Such battery systems may include lithium-ion, lithium iron phosphate, nickel cobalt aluminum, nickel cobalt manganese, and other types and/or chemistries of battery cells in non-limiting examples. Battery cells are arranged in the battery system in series and/or parallel configurations to meet desired voltage, power, capacity, and other requirements for specific vehicle and other applications. Battery systems may include a battery thermal management system having cooling and/or heating functions to maintain desired cell operating temperatures and perform other functions for the battery pack. Such battery thermal management systems may utilize air, oil, coolant, or another gaseous or liquid fluid to heat and/or cool the battery cells and/or other battery pack components.

As one example, WO2022/235192 A1 shows a battery module with a thermal management system comprising cooling liquid. The liquid cooled module has a liquid sealed casing enclosing the battery cells. The liquid cooled battery module provides improved heat dis-sipation and improved flow in the liquid cooled module.

It is further known from WO 2022/069910 A1 to provide a battery module and a method for cooling the battery module. The battery module comprises a housing and a plurality of battery cells positioned inside the housing, an inlet for feeding the cooling fluid into the housing and an outlet for feeding the cooling fluid away from the housing, a first cell holder and a second cell holder for holding battery cells, each cell holder positioned inside the housing, the first cell holder and the second cell holder spaced apart and each cell holder connected to the housing. The module further comprises a first cooling channel partially bounded by a housing cover and the first cell holder, a second cooling channel partially bounded by a housing base and the second cell holder, a middle cooling channel partially bounded by the first cell holder and the second cell holder. The first cooling channel and the second cooling channel are fluidly connected both to the inlet and the middle cooling channel, and the middle cooling channel is fluidly connected with the outlet. The battery cells are projecting inside the first cooling channel and/or the second cooling channel.

### SUMMARY

In accordance with aspects of the present invention, a battery system according to claim 1 is provided.

The end fluid circuit may be in fluid communication with the cell holder fluid circuit at a divergence disposed between the fluid circuit inlet and the plurality of cells. The end fluid circuit may be in fluid communication with the cell holder fluid circuit at a convergence disposed between the fluid circuit outlet and the plurality of cells. The cell holder fluid circuit may be aligned with the end fluid circuit such that the cell holder fluid circuit and the end fluid circuit flow in parallel directions. The system includes a plurality of conductors positioned between the plurality of cells and the end fluid circuit to conduct heat between the plurality of cells and the end fluid circuit. The system may include a second cell holder disposed at an axial side of the end fluid circuit opposite from the cell holder and a second plurality of cells disposed in the second cell holder and oriented to be aligned with the axis. The system may include a first plurality of conductors positioned between the plurality of cells and the end fluid circuit to conduct heat between the plurality of cells and the end fluid circuit, and a second plurality of conductors positioned between the second plurality of cells and the end fluid circuit to conduct heat between the second plurality of cells and the end fluid circuit. The system may include a plurality of seals disposed between the plurality of cells and the cell holder. The cell holder fluid circuit and/or the end fluid circuit may be configured to circulate a dielectric fluid. The cell holder fluid circuit and/or the end fluid circuit may be configured to circulate a non-dielectric fluid.

In accordance with aspects of the present disclosure, a battery system includes a cell holder, a plurality of cells disposed in the cell holder and oriented to be aligned with an axis, an end fluid circuit formed by an unobstructed channel at an axial end of the plurality of cells and extending from a fluid circuit inlet to a fluid circuit outlet, and a cell holder fluid circuit extending through the cell holder and around each of the plurality of cells and in fluid communication with the end fluid circuit.

The cell holder fluid circuit may be in fluid communication with the end fluid circuit at a divergence disposed between the fluid circuit inlet and the plurality of cells. The cell holder fluid circuit may be in fluid communication with the end fluid circuit at a convergence disposed between the fluid circuit outlet and the plurality of cells. The cell holder fluid circuit may be aligned with the end fluid circuit such that the cell holder fluid circuit and the end fluid circuit flow in parallel directions. The system may further include a plurality of conductors positioned between the plurality of cells and the end fluid circuit to conduct heat between the plurality of cells and the end fluid circuit. The system may further include a second cell holder disposed at an axial side of the end fluid circuit opposite from the cell holder and a second plurality of cells disposed in the second cell holder and oriented to be aligned with the axis. The system may further include a first plurality of conductors positioned between the plurality of cells and the end fluid circuit to conduct heat between the plurality of cells and the end fluid circuit and a second plurality of conductors positioned between the second plurality of cells and the end fluid circuit to conduct heat between the second plurality of cells and the end fluid circuit. The system may further include a plurality of seals disposed between the plurality of cells and the cell holder. The cell holder fluid circuit and/or the end fluid circuit may be configured to circulate a dielectric fluid. The cell holder fluid circuit and/or the end fluid circuit may be configured to circulate a non-dielectric fluid.

Other features and aspects will become apparent by consideration of the detailed description, claims, and accompanying drawings.

### BRIEF DESCRIPTION OF THE DRAWINGS

The detailed description of the drawings refers to the accompanying figures.
FIG. 1 illustrates a battery system in accordance with an embodiment of the present disclosure.
FIG. 2 is an exploded view of a battery system in accordance with an embodiment of the present disclosure.
FIG. 3 is an enlarged cross-sectional view of a battery system in accordance with an embodiment of the present disclosure.
FIG. 4 is an enlarged cross-sectional view of a battery system in accordance with an embodiment of the present disclosure.
FIG. 5 illustrates a battery system in accordance with an embodiment of the present disclosure.
FIG. 6 illustrates a battery system in accordance with an embodiment of the present disclosure.
FIG. 7 is a cross-sectional view of a battery system in accordance with an embodiment of the present disclosure.
FIG. 8 is an exploded view of a battery system in accordance with an embodiment of the present disclosure.
FIG. 9 is an exploded view of a battery system in accordance with an embodiment of the present disclosure.
FIG. 10 is a cross-sectional view of a battery system in accordance with an embodiment of the present disclosure.
FIG. 11 illustrates a battery system in accordance with an embodiment of the present disclosure.
FIG. 12 is an exploded view of a battery system in accordance with an embodiment of the present disclosure.
FIG. 13 is a cross-sectional view of a battery system in accordance with an embodiment of the present disclosure.
FIG. 14 is a cross-sectional view of a battery system in accordance with an embodiment of the present disclosure.
FIG. 15 is a cross-sectional view of a battery system in accordance with an embodiment of the present disclosure.

Like reference numerals are used to indicate like elements throughout the several figures.

### DETAILED DESCRIPTION

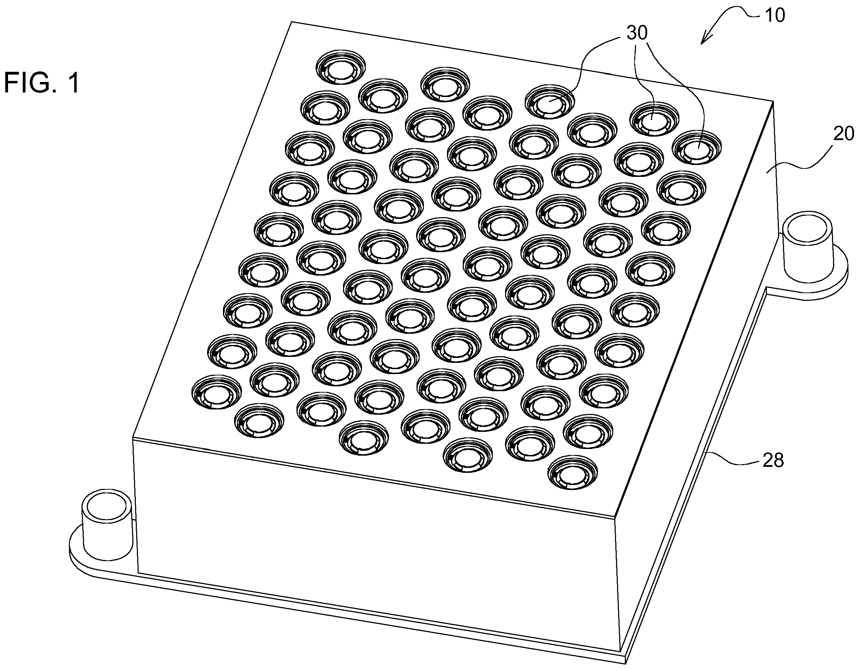

Referring to FIGs. 1-5, a battery system 10 is illustrated in accordance with an embodiment of the present disclosure. The battery system 10 illustrated in various embodiments of the present disclosure includes an immersion cooled battery arrangement but element, methods, and other aspects of the present disclosure may be applied to systems other than immersion cooled battery systems. The battery system 10 includes a controller (not shown) configured to control the temperature, pressure, flow rate, and/or other aspects of a fluid 26 of or utilized with the battery system 10. The controller may interface with or form part of a battery management system (not shown) or other controller or system. The fluid 26 of the embodiments of the present disclosure may include a single fluid or multiple, diverse fluids, as explained in further detail below.

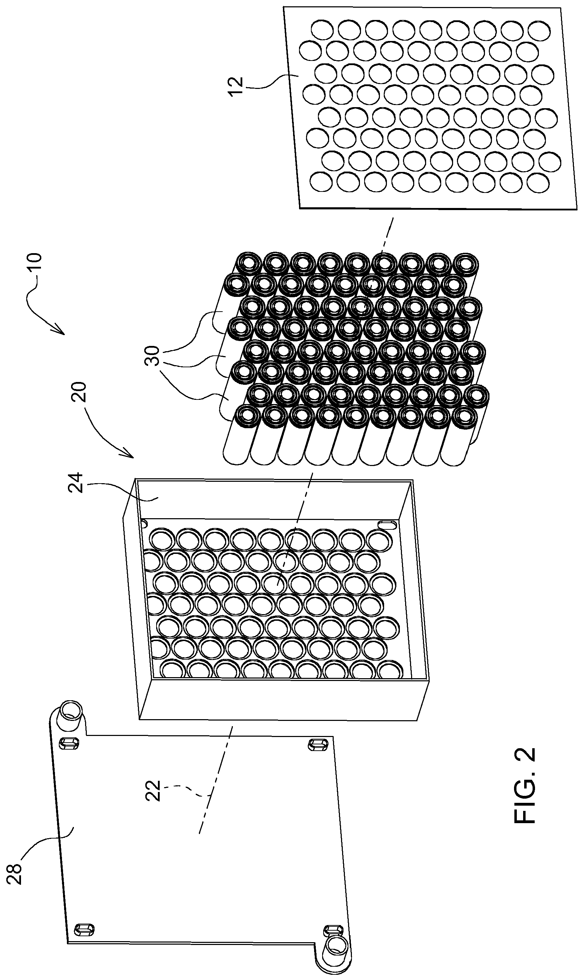

The battery system 10 includes a cell holder 20. The cell holder 20 includes a cavity 24. The cell holder 20 includes an end cover 12, and the battery system 10 includes a plate 28, as shown in the embodiment illustrated in FIG. 2. In additional embodiments, the cell holder 20 may be integrally formed with one or both of the end cover 12 and the plate 28.

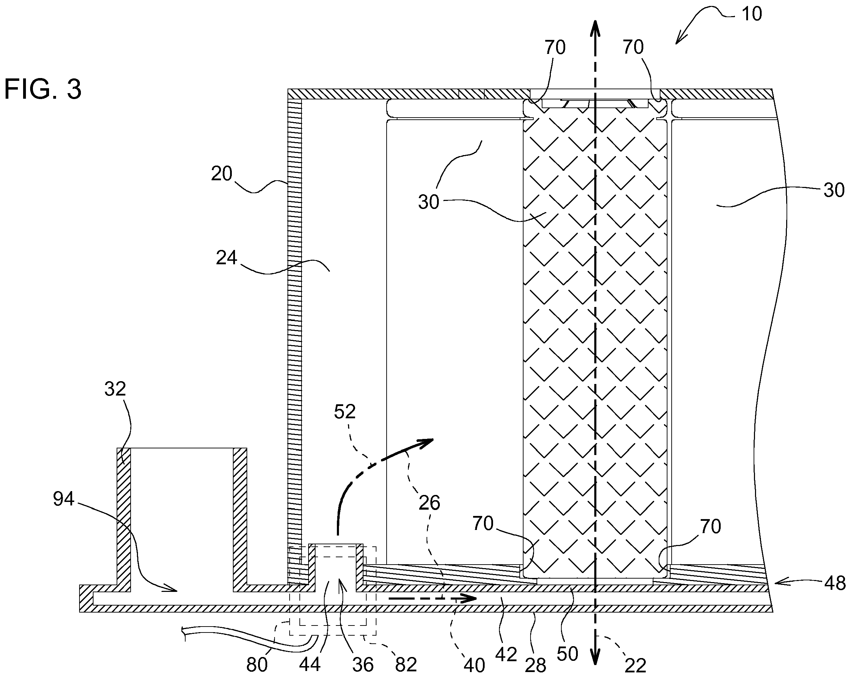

The battery system 10 further includes cells 30 disposed, at least partially, in the cell holder 20. In the illustrated embodiment of FIGs. 3-5, the cells 30 are positioned at least partially in or through the cavity 24 such that the cells 30 are spaced apart to allow fluid flow around each cell 30. The cells 30 in the illustrated embodiment include cylindrical cells 30. In additional embodiments not illustrated, the cells 30 include prismatic, pouch, and/or other types or configurations or combinations of types.

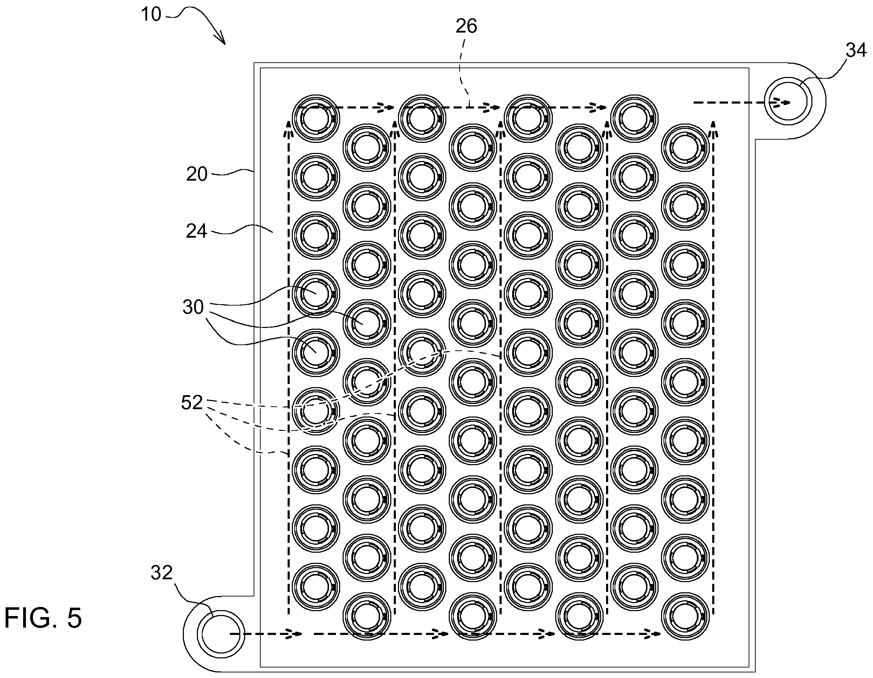

Each cell 30 in the battery system 10 is oriented to be aligned with an axis 22 as illustrated in FIGs. 2 and 3. In additional embodiments not shown, one or more of the cells 30 may be oriented differently and/or not aligned with each other or the axis 22. As illustrated in FIG. 5, the battery system 10 further includes a cell holder fluid circuit 52 formed through the cells and around and/or between each cell 30 and extends through the cavity 24 of the cell holder 20. The cell holder fluid circuit 52 extends in a direction perpendicular to the axis 22 in the illustrated embodiment of FIGs. 2-5 but may extend in other directions in additional embodiments. The cells 30 and/or the cell holder fluid circuit 52 is/are arranged or otherwise configured such that one or more of the cells 30 may obstruct a flow of the fluid 26 through the cavity 24. The fluid 26 flowing in the cell holder fluid circuit 52 may or is configured to be in contact with and/or impinge upon one or more or all of the cells 30.

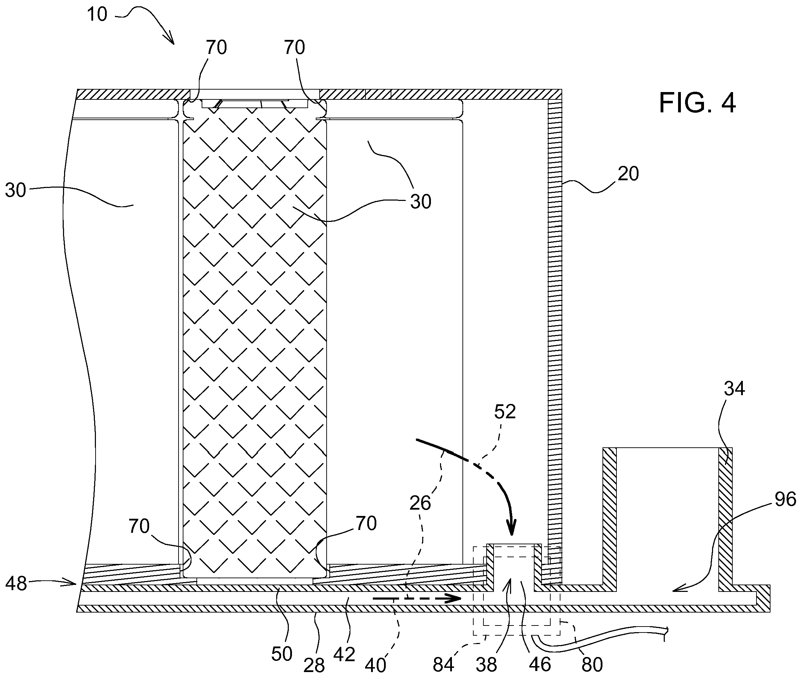

As shown in FIGs. 3 and 4, the battery system 10 further includes an end fluid circuit 40 formed by a channel 42 at an axial end 48 of the cells 30. The channel 42 and/or the end fluid circuit 40 of one or more embodiments is or includes an unobstructed, continuous, and/or contiguous opening or passageway. Although not shown in its entirey in FIGs. 3 and 4, the channel 42 and/or the end fluid circuit 40 of an embodiment is unobstructed, continuous, and/or contiguous from an end fluid circuit inlet 94 to an end fluid circuit outlet 96. The channel 42 and/or the end fluid circuit 40 extends or flows in parallel with the cell holder fluid circuit 52 and/or the cavity 24 in one or more embodiments. In embodiments, the channel 42 is a single, fully open passageway, and it may extend and/or flow under, across, and/or against multiple or all conductors 50 and/or cells 30 of the cell holder 20. The channel 42 and/or the end fluid circuit 40 of the embodiments is spaced from the cell holder fluid circuit 52 and/or does not directly contact or flow against one or more or all of the cells 30.

In accordance with certain embodiments, the end fluid circuit 40 is at least partially and/or selectively in fluid communication with the cell holder fluid circuit 52, such as at a first end 36 and a second end 38 of the end fluid circuit 40 or the cell holder fluid circuit 52. The end fluid circuit 40 is in thermal contact or is otherwise configured to transfer heat with one or more or all cells 30 in the cell holder 20.

In an embodiment, the cell holder fluid circuit 52 is at least partially or entirely radially or otherwise aligned with the end fluid circuit 40 relative to the axis 22.

In the illustrated embodiment, the end fluid circuit 40 extends from a fluid circuit inlet 32 to a fluid circuit outlet 34. In an additional embodiment not shown, the cell holder fluid circuit 52 extends from the fluid circuit inlet 32 to the fluid circuit outlet 34.

The end fluid circuit 40 of an embodiment is in fluid communication with the cell holder fluid circuit 52 at a divergence 44 disposed between the fluid circuit inlet 32 and the cells 30 and/or upstream of the cells 30.

The end fluid circuit 40 of an embodiment is in fluid communication with the cell holder fluid circuit 52 at a convergence 46 disposed between the fluid circuit outlet 34 and the cells 30 and/or downstream of the cells 30.

The battery system 10 further includes one or more seals 70 disposed between each of the cells 30 and the cell holder 20.

The battery system 10 of one or more embodiments includes at least one valve 80 to selectively control a flow of the fluid 26 to and/or through the cell holder fluid circuit 52 and/or the end fluid circuit 40. In the embodiments illustrated in FIGs. 3 and 4, a first valve 82 is positioned at the divergence 44 to control flow of the fluid 26 into one or both of the cell holder fluid circuit 52 and/or the end fluid circuit 40, and a second valve 84 is positioned at the convergence 46 to control flow of the fluid 26 from one or both of the cell holder fluid circuit 52 and/or the end fluid circuit 40. The first valve 82 and/or the second valve 84 opens or closes and/or opens at various discrete opening degrees or across infinitely variable degrees to selectively control flow of the fluid 26 in embodiments of the present disclosure. The first valve 82 and/or the second valve 84 are operated by the controller (not shown) of a thermal management system or battery management system of the battery system 10 in accordance with any one or more functions, methods, or operations of embodiments of the battery system 10 described herein.

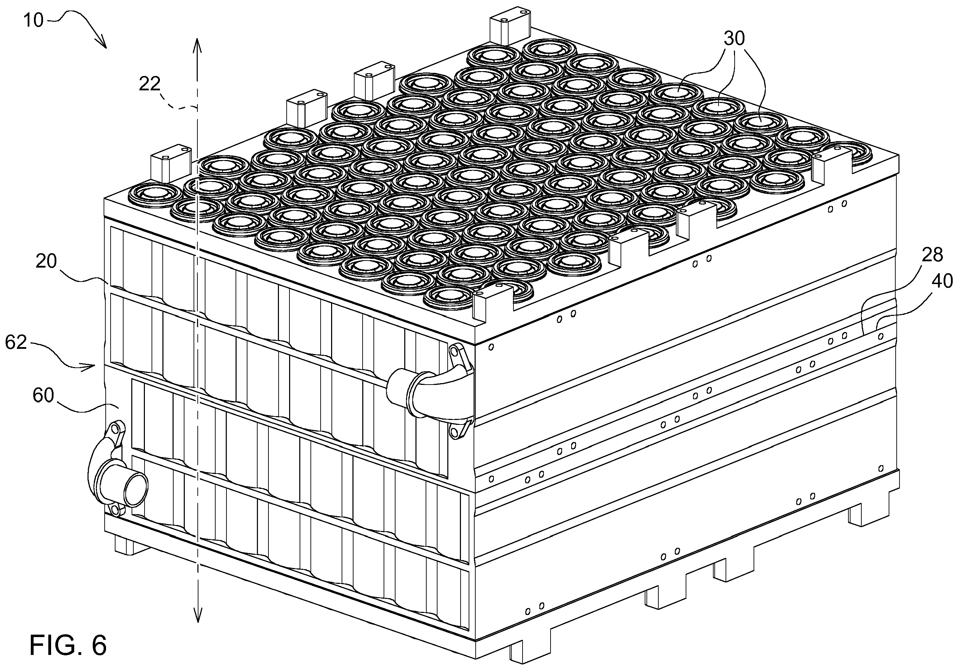

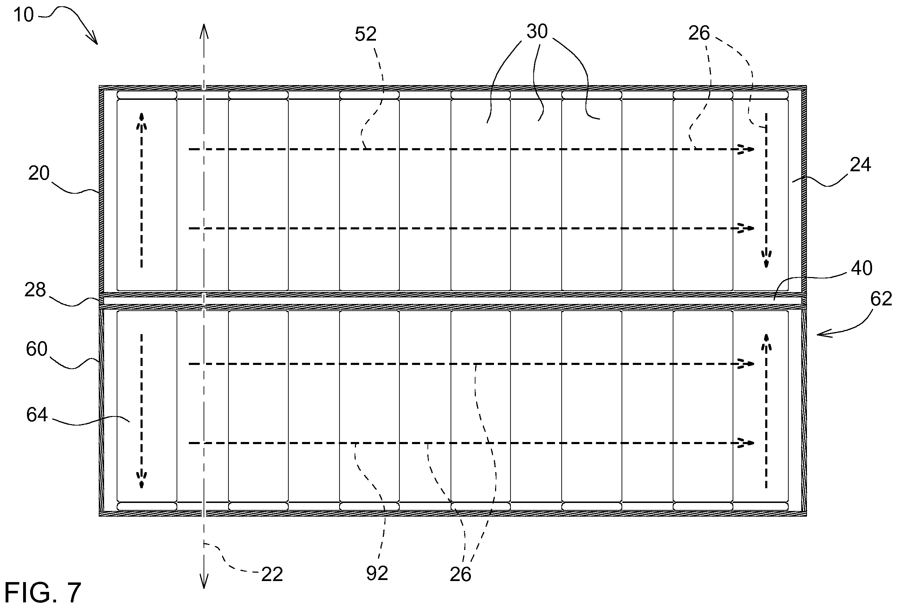

Referring now to FIG. 6 and 7, the battery system 10 of certain embodiments further includes a second cell holder 60 disposed at an axial side 62 of the end fluid circuit 40 opposite from the cell holder 20. The second cell holder 60 includes a second cavity 64. The battery system 10 further includes cells 30 disposed in the second cavity 64 and/or the second cell holder 60 and oriented to be aligned with the axis 22. The plate 28 of FIGs. 6 and 7 includes the end fluid circuit 40 and is disposed between the cell holder 20 and the second cell holder 60 in the illustrated embodiment but may also or alternatively be disposed at outer ends of the cell holder 20 and/or the second cell holder 60 in additional embodiments not illustrated. It will be appreciated that any number of cell holders 20, 60 and/or plates 28 in any stacked, spaced, or other arrangement may be included, in addition to the cell holder 20, the plate 28, and the second cell holder 60, to form the battery system 10 of one or more embodiments of the present disclosure.

As best shown in FIGs. 3 and 4, the battery system 10 of one or more embodiments includes conductors 50 positioned between each cell 30 and the end fluid circuit 40 to conduct heat between the cells 30 and the end fluid circuit 40. In an embodiment, the conductors 50 contact both the cell 30 and the end fluid circuit 40. The conductors 50 are composed of metallic, ceramic, and/or another material and are attached to one or more cells 30 in the illustrated embodiment to transfer and/or conduct heat between the cell 30 and the end fluid circuit 40. In one or more embodiments, the conductors 50 are formed as a single piece, such as a continuous piece extending across or under multiple or all cells 30, or multiple pieces in contact with one or more cells 30. The conductors 50 are positioned in the cell holder 20 and/or the second cell holder 60 and/or form part of an outer surface of the cell holder 20 and/or the second cell holder 60 in embodiments.

The cell holder fluid circuit 52 and/or the end fluid circuit 40 of one or more embodiments is configured to circulate a dielectric fluid as the fluid 26. The dielectric fluid is a dielectric oil in a non-limiting example.

The cell holder fluid circuit 52 and/or the end fluid circuit 40 of one or more embodiments is configured to circulate non-dielectric fluid as the fluid 26. The non-dielectric fluid is water ethylene glycol in a non-limiting example. The water ethylene glycol includes any percentage of water from 0 to 100% in various embodiments. A method in accordance with embodiments of the present disclosure controls a flow of the fluid(s) 26 through the battery system 10. The method includes providing cells 30 disposed at least partially in the cavity 24 of the cell holder 20. The method further includes circulating the fluid(s) 26 through the cavity 24 of the cell holder 20 and between and around one or more or all of the cells 30. The method further includes circulating the fluid(s) 26 through the channel 42 at the axial end 48 of the plurality of cells. With reference to FIGs. 3 and 4, the method further includes selectively increasing, restricting, fully opening, or stopping a flow of the fluid(s) 26, such as with the valve(s) 80, through the cavity 24 of the cell holder 20 and/or the channel 42 based on an operating condition of the battery system 10. The operating condition of the battery system 10 includes a discharge rate of the cells 30, a charge rate of the cells 30, a state of charge of one or more cell(s) 30, a temperature of the fluid(s) 26, a pressure of the fluid(s) 26, a temperature of one or more of the cell(s) 30, and a temperature differential of two or more cells 30. The controller (not shown) is utilized in one or more embodiments for operation of one or more or all steps of the method, one or more features of the system 10, and/or the operation of the valve(s) 80.

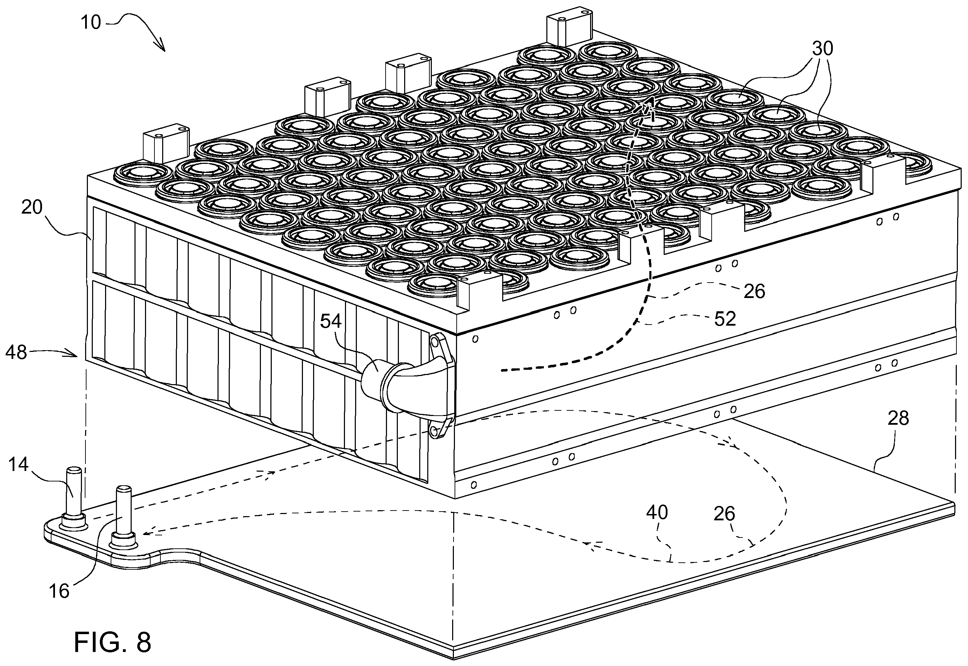

With reference to FIG. 8 and continuing reference to FIGs. 3 and 4, the method and/or the battery system 10 according to one or more embodiments may include circulating different fluids 26, such as a first fluid through the cavity 24 of the cell holder 20 and around the cells 30 and a second fluid through the channel 24 and/or the plate 28 at the axial end 48 of the cells 30. The first fluid and the second fluid may each be or include dielectric fluid or non-dielectric fluid, as further described herein, in embodiments of the present disclosure. The cell holder fluid circuit 52 of an embodiment extends through the cell holder 20 from a cell holder fluid circuit inlet 54 to a cell holder fluid circuit outlet (not visible behind cell holder 20 in FIG. 8). The end fluid circuit 40 is formed by the channel 42 at the axial end 48 of the cells 30 and includes an end fluid circuit inlet 14 and an end fluid circuit outlet 16.

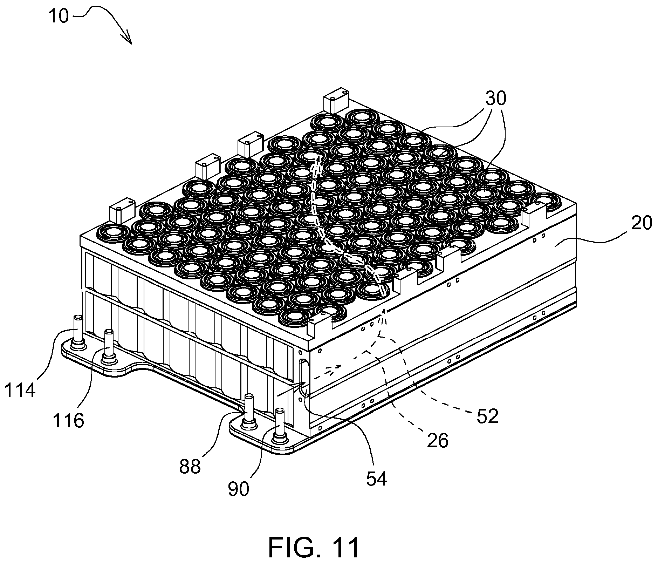

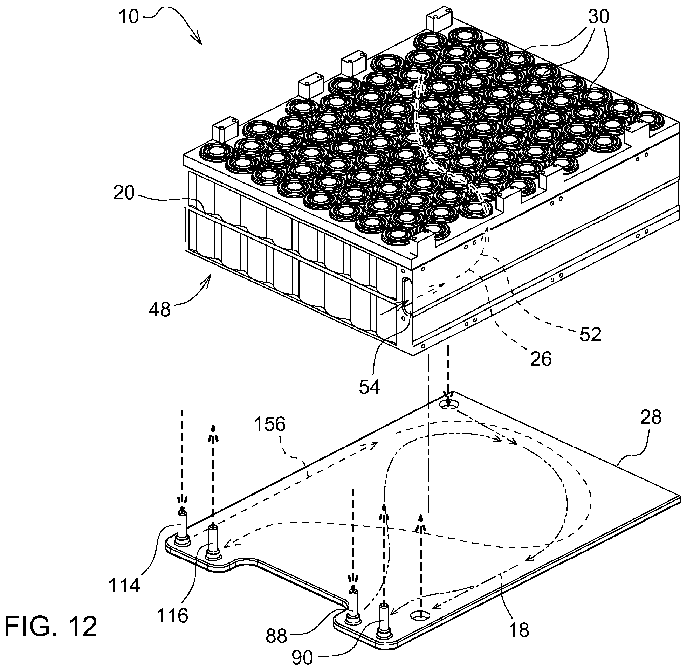

As shown in FIGs. 11 and 12, the cell holder fluid circuit 52 of an embodiment extends through the cell holder 20 from the cell holder fluid circuit inlet 54 to a cell holder fluid circuit outlet (not visible behind cell holder 20).

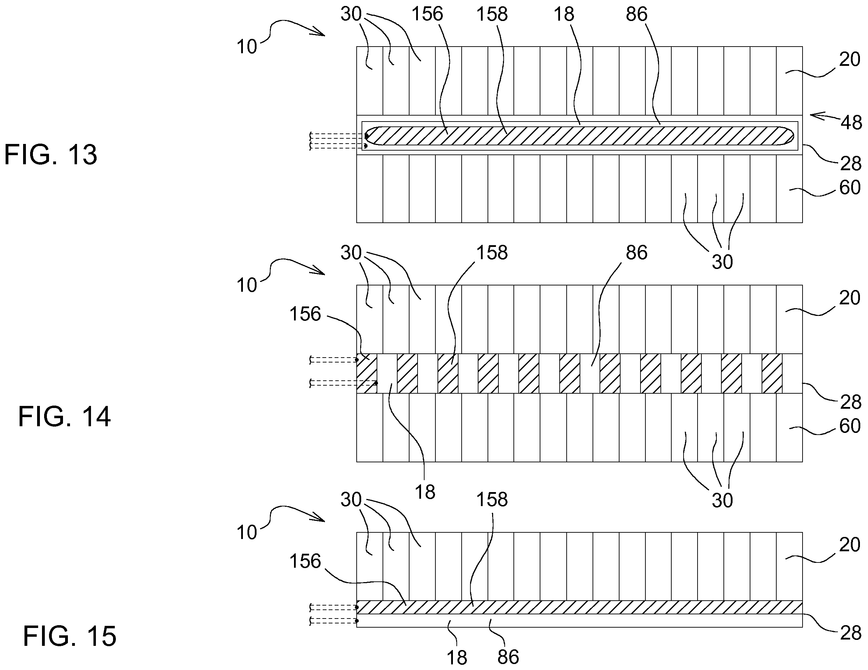

As shown in the embodiment of FIGs. 11 and 12 and schematically for various embodiments in FIGS. 13-15, a first end fluid circuit 156 is formed by a first channel 158 at the axial end 48 of the cells 30 and includes a first end fluid circuit inlet 114 and a first end fluid circuit outlet 116. A second end fluid circuit 18 is formed by a second channel 86 at the axial end 48 of the cells 30 and includes a second end fluid circuit inlet 88 and a second end fluid circuit outlet 90. As shown in FIG. 12, one or more embodiments of the battery system 10 include the fluid 26 flowing through the second end fluid circuit 18 while receiving the fluid 26 from, sending the fluid 26 to, or otherwise being in fluid communication with the cell holder fluid circuit 52, as shown by the openings in the plate 28 shown in FIG. 12. Although not shown in the embodiment of FIG. 8, such fluid communication between any end fluid circuit 40 and cell holder fluid circuit 52 may be enabled, prevented, or controlled for any one or more embodiments of the battery system 10. The battery system 10 of FIGs. 13 and 14 includes the second cell holder 60 disposed at the axial side of the first end fluid circuit 56 and the second end fluid circuit 18 opposite from the cell holder 20. The second cell holder 60 includes a second cell holder fluid circuit 92 and any one or more features or functions of additional embodiments described in the present disclosure. The system 10 illustrated in embodiments shown in FIGs. 13 and 14 includes cell holders 20, 60 but may also or alternatively include only cell holder 20, as illustrated in FIG. 15, or include additional cell holders and/or plate(s) 28 connected to or integrally formed with the system 10 in additional embodiments.

The battery system 10 of FIG. 13 illustrates the first end fluid circuit 156 disposed inside of and/or surrounded by the second end fluid circuit 18. In the embodiment of FIG. 13, the fluid 26 of the first end fluid circuit 156 may include a non-dielectric fluid, and the fluid 26 of the second end fluid circuit 18 may include a dielectric fluid such that, in a non-limiting example, the non-dielectric fluid may transfer heat to the dielectric fluid upon startup of the battery system 10 and/or when a temperature of the battery system 10 is below a threshold temperature.

The battery system 10 of FIG. 14 illustrates the first end fluid circuit 156 being disposed in a serpentine, spiral, row, or similar pattern with the second end fluid circuit 18 whereby both the first end fluid circuit 156 and the second end fluid circuit 18 extend into contact across all or most of the cells 30 of the cell holder 20 and/or the cell holder 60.

The battery system 10 of FIG. 15 illustrates the first channel 158 being layered on or over the second channel 86 such that the first end fluid circuit 156 is closer to the second end fluid circuit 18. In the embodiment of FIG. 15, the first end fluid circuit 156 may include a dielectric fluid and the second end fluid circuit 18 may include a non-dielectric fluid such that, in a non-limiting example, the non-dielectric fluid may transfer heat to the dielectric fluid upon startup of the battery system 10 and/or when a temperature of the battery system 10 is below a threshold temperature.

In an embodiment, the first end fluid circuit 56 is in fluid communication with the cell holder fluid circuit 52 at the divergence 44 disposed upstream of the cells 30. The first end fluid circuit inlet 14 may include or be formed as the divergence 44 disposed upstream of the cells 30. In an embodiment, the first end fluid circuit 56 is in fluid communication with the cell holder fluid circuit 52 at the convergence 46 disposed downstream of the cells 30. The first end fluid circuit outlet 16 may include or be formed as the convergence 46 disposed downstream of the cells 30.

In at least one embodiment, any one or more of the first end fluid circuit 156, the cell holder fluid circuit 52, and second cell holder fluid circuit 92 circulates a dielectric fluid, and the second end fluid circuit 18 circulates a non-dielectric fluid. Any one or more fluid(s) 26 may be included in the first end fluid circuit 156, the second end fluid circuit 18, the cell holder fluid circuit 52, or the second cell holder fluid circuit 92.

A method of an embodiment includes circulating a first fluid 26 and a second fluid 26 that is different from the first fluid 26 through the battery system 10. The method includes providing the cells 30 disposed at least partially in the cavity 24 of the cell holder 20 of the battery system 10, initiating circulation of the second fluid 26 through the unobstructed channel 42 at the axial end 48 of the cells 30, initiating circulation of the first fluid 26 through the cavity 24 of the cell holder 20 and between and around the cells 30 after the initiation of circulation of the second fluid 26 through the channel 42 at the axial end 48 of the cells 30. The method may further include initiating circulation of the first fluid 26 through the second channel 86 at the axial end 48 of the cells 30 after the initiation of circulation of the second fluid 26 through the channel 42 at the axial end 48 of the cells 30. The method may further include diverging the first fluid 26 upstream of the cells 30 into the second channel 86 at the axial end 48 of the cells 30 and the cavity 24 of the cell holder 20. The method may further include converging the first fluid 26 downstream of the cells 30 from the cavity 24 of the cell holder 20 with the second channel 86 at the axial end 48 of the cells 30.

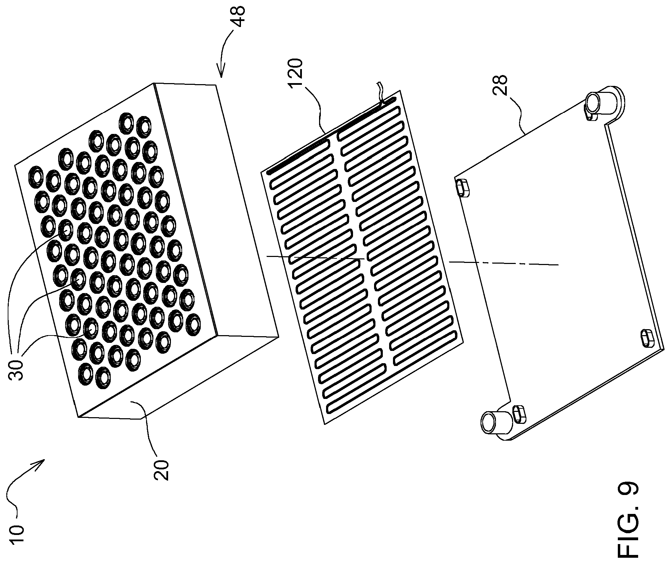

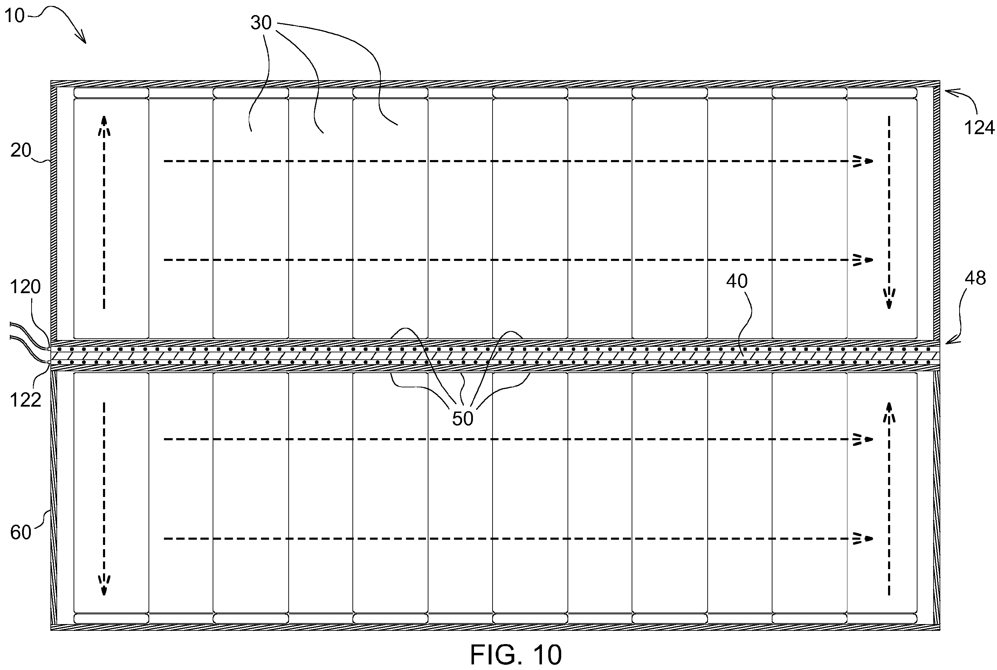

Referring now to FIGs. 9 and 10, a battery system 10 in accordance with embodiments of the present disclosure includes a heater 120 disposed between the cells 30 and the end fluid circuit 40 at the axial end 48 of the cells 30 and configured to heat or increase the temperature of the cells 30. The system 10 of certain embodiments includes conductors 50 positioned between the cells 30 and the heater 120 to conduct heat between the cells 30 and the heater 120. The system 10 may further include a second heater 122 disposed between second cells 30 in a second holder 60 and the end fluid circuit 40 and configured to heat the second cells 30. Alternatively, or additionally, the second heater 122 or an additional heater may be disposed at a second axial end 124 of the cells 30 opposite from the axial end 48 of the cells 30 and configured to heat the cells 30.

The heater 120 and/or the second heater 122 of one or more embodiments includes or is an electrically resistive heater. The heater 120 and/or the second heater 122 is/are configured to be activated based on at least one temperature threshold. In embodiments, the heater 120 and/or the second heater 122 is/are configured to be activated based on a threshold temperature of a single cell 30, multiple cells 30, or all cells 30 of the system 10 and/or a temperature of one or more of the fluid(s) 26 circulating in the system 10. In the illustrated embodiment, the heater 120 and/or the second heater 122 includes a thermally conductive material to allow heat to be transferred between the end fluid circuit 40 and the cells 30 through the heater 120 and/or the second heater 122 such that the end fluid circuit 40 may still heat or cool the cells 30 as needed.

Without in any way limiting the scope, interpretation, or application of the claims appearing below, a technical effect of one or more of the example embodiments disclosed herein is to provide the battery system 10 and associated methods to improve thermal management of the cells 30. Such improved thermal management of the cells 30 of the battery system 10 will result in improved efficiency of the battery system 10, increased life cycle and capacity of the cells 30 and other components of the battery system 10, and improved cell temperature uniformity. The battery system 10 and associated methods further provides flexibility and additional control for the fluid 26 utilized for thermal management of the cells 30. The system 10 and associated methods allow for a non-dielectric fluid to be circulated through the plate 28 during, for example, low load operation and a dielectric fluid to be circulated through the cavity 24 of one or more holder(s) 20, 60 during higher load operation. Further, where the fluid 26 is a single fluid or two different fluids, the fluid 26 may be controlled to flow into one or both of the cavity 24 and the plate 28 depending upon environment temperature, power demand, cell temperature level and/or uniformity, and/or one or more additional factors. Finally, the system 10 and associated methods may include one or more heater(s) 120 to heat the cells 30 more quickly and efficiently while providing the ability to heat or cool the cells 30 with the plate 28 and the fluid 26 in the cavity 24.

## Claims

1. A battery system (10) comprising:
a cell holder (20);
a plurality of cells (30) disposed in the cell holder (20) and oriented to be aligned with an axis (22);
a cell holder fluid circuit (52) formed around each of the plurality of cells (30) and extending through the cell holder (20) from a fluid circuit inlet (32) to a fluid circuit outlet (34);
wherein
an end fluid circuit (40) formed by an unobstructed channel (42) at an axial end (48) of the plurality of cells (30) and in fluid communication with the cell holder fluid circuit (52),
**characterized in that**
the channel (42) and/or the end fluid circuit (40) is spaced from the cell holder fluid circuit (52) and/or does not directly contact or flow against one or more or all of the cells (30); and
a plurality of conductors (50) positioned between the plurality of cells (30) and the end fluid circuit (40) to conduct heat between the plurality of cells (30) and the end fluid circuit (40).

2. The system (10) of claim 1, wherein the end fluid circuit (40) is in fluid communication with the cell holder fluid circuit (52) at a divergence (44) disposed between the fluid circuit inlet (32) and the plurality of cells (30).

3. The system (10) of claim 1 or 2, wherein the end fluid circuit (40) is in fluid communication with the cell holder fluid circuit (52) at a convergence (46) disposed between the fluid circuit outlet (34) and the plurality of cells (30).

4. The system (10) of one of the claims 1 to 3, wherein the cell holder fluid circuit (52) is aligned with the end fluid circuit (40) such that the cell holder fluid circuit (52) and the end fluid circuit (40) flow in parallel directions.

5. The system (10) of one of the claims 1 to 4, further comprising:
a second cell holder (60) disposed at an axial side of the end fluid circuit (40) opposite from the cell holder (20); and
a second plurality of cells (30) disposed in the second cell holder (60) and oriented to be aligned with the axis (22).

6. The system (10) of one of the claims 1 to 5, further comprising:
a first plurality of conductors (50) positioned between the plurality of cells (30) and the end fluid circuit (40) to conduct heat between the plurality of cells (30) and the end fluid circuit (40); and
a second plurality of conductors (50) positioned between the second plurality of cells (30) and the end fluid circuit (40) to conduct heat between the second plurality of cells (30) and the end fluid circuit (40).

7. The system (10) of one of the claims 1 to 6, further comprising a plurality of seals (70) disposed between the plurality of cells (30) and the cell holder (20).

## Patentansprüche

1. Batteriesystem (10), das Folgendes umfasst:
einen Zellhalter (20);
mehrere Zellen (30), die in dem Zellhalter (20) angeordnet und zur Ausrichtung auf eine Achse (22) orientiert sind;
einen Zellhalterfluidkreis (52), der um alle der mehreren Zellen (30) ausgebildet ist und sich durch den Zellhalter (20) von einem Fluidkreiseinlass (32) zu einem Fluidkreisauslass (34) erstreckt;
wobei
einen Endfluidkreis (40), der durch einen unversperrten Kanal (42) an einem axialen Ende (48) der mehreren Zellen (30) gebildet wird und mit dem Zellhalterfluidkreis (52) in Strömungsverbindung steht.
**dadurch gekennzeichnet, dass**
der Kanal (42) und/oder der Endfluidkreis (40) von dem Zellhalterfluidkreis (52) beabstandet ist bzw. sind und/oder nicht direkt eine oder mehrere oder alle der Zellen (30) berührt bzw. berühren oder gegen diese strömt bzw. strömen.
mehrere Leiter (50) zwischen den mehreren Zellen (30) und dem Endfluidkreis (40) zur Wärmeleitung zwischen den mehreren Zellen (30) und dem Endfluidkreis (40) positioniert sind.

2. System (10) nach Anspruch 1, wobei der Endfluidkreis (40) mit dem Zellhalterfluidkreis (52) an einer Divergenz (44), die zwischen dem Fluidkreiseinlass (32) und den mehreren Zellen (30) angeordnet ist, in Strömungsverbindung steht.

3. System (10) nach Anspruch 1 oder 2, wobei der Endfluidkreis (40) mit dem Zellhalterfluidkreis (52) an einer Konvergenz (46), die zwischen dem Fluidkreisauslass (34) und den mehreren Zellen (30) angeordnet ist, in Strömungsverbindung steht.

4. System (10) nach einem der Ansprüche 1 bis 3, wobei der Zellhalterfluidkreis (52) mit dem Endfluidkreis (40) ausgerichtet ist, sodass der Zellhalterfluidkreis (52) und der Endfluidkreis (40) in parallelen Richtungen fließen.

5. System (10) nach einem der Ansprüche 1 bis 4, ferner umfassend:
einen zweiten Zellhalter (60), der an einer axialen Seite des Endfluidkreises (40) gegenüber dem Zellhalter (20) angeordnet ist; und
zweite mehrere Zellen (30), die in dem zweiten Zellhalter (60) angeordnet und zur Ausrichtung auf die Achse (22) orientiert sind.

6. System (10) nach einem der Ansprüche 1 bis 5, ferner umfassend:
erste mehrere Leiter (50), die zwischen den mehreren Zellen (30) und dem Endfluidkreis (40) zur Wärmeleitung zwischen den mehreren Zellen (30) und dem Endfluidkreis (40) positioniert sind; und
zweite mehrere Leiter (50), die zwischen den zweiten mehreren Zellen (30) und dem Endfluidkreis (40) zur Wärmeleitung zwischen den zweiten mehreren zweiten Zellen (30) und dem Endfluidkreis (40) positioniert sind.

7. System (10) nach einem der Ansprüche 1 bis 6, das ferner mehrere Dichtungen (70) umfasst, die zwischen den mehreren Zellen (30) und dem Zellhalter (20) angeordnet sind.

## Revendications

1. Système de batterie (10), comprenant :
un support de cellules (20) ;
une pluralité de cellules (30) disposées dans le support de cellules (20) et orientées pour être alignées avec un axe (22) ;
un circuit de fluide de support de cellules (52) formé autour de chacune de la pluralité de cellules (30) et s'étendant à travers le support de cellules (20) depuis une entrée de circuit de fluide (32) jusqu'à une sortie de circuit de fluide (34) ;
dans lequel
un circuit de fluide d'extrémité (40) formé par un canal non obstrué (42) au niveau d'une extrémité axiale (48) de la pluralité de cellules (30) et en communication fluidique avec le circuit de fluide de support de cellules (52),
**caractérisé en ce que**
le canal (42) et/ou le circuit de fluide d'extrémité (40) est espacé du circuit de fluide de support de cellules (52) et/ou n'entre pas directement en contact avec, ou ne passe pas directement contre, une ou plusieurs ou la totalité des cellules (30) ; et
une pluralité de conducteurs (50) positionnés entre la pluralité de cellules (30) et le circuit de fluide d'extrémité (40) pour conduite de la chaleur entre la pluralité de cellules (30) et le circuit de fluide d'extrémité (40).

2. Système (10) de la revendication 1, dans lequel le circuit de fluide d'extrémité (40) est en communication fluidique avec le circuit de fluide de support de cellules (52) au niveau d'une divergence (44) disposée entre l'entrée de circuit de fluide (32) et la pluralité de cellules (30).

3. Système (10) de la revendication 1 ou 2, dans lequel le circuit de fluide d'extrémité (40) est en communication fluidique avec le circuit de fluide de support de cellules (52) au niveau d'une convergence (46) disposée entre la sortie de circuit de fluide (34) et la pluralité de cellules (30).

4. Système (10) de l'une des revendications 1 à 3, dans lequel le circuit de fluide de support de cellules (52) est aligné avec le circuit de fluide d'extrémité (40) de manière telle que le circuit de fluide de support de cellules (52) et le circuit de fluide d'extrémité (40) passent dans des directions parallèles.

5. Système (10) de l'une des revendications 1 à 4, comprenant en outre :
un second support de cellules (60) disposé sur un côté axial du circuit de fluide d'extrémité (40) opposé par rapport au support de cellules (20) ; et
une seconde pluralité de cellules (30) disposées dans le second support de cellules (60) et orientées pour être alignées avec l'axe (22).

6. Système (10) de l'une des revendications 1 à 5, comprenant en outre :
une première pluralité de conducteurs (50) positionnés entre la pluralité de cellules (30) et le circuit de fluide d'extrémité (40) pour conduire de la chaleur entre la pluralité de cellules (30) et le circuit de fluide d'extrémité (40) ; et
une seconde pluralité de conducteurs (50) positionnés entre la seconde pluralité de cellules (30) et le circuit de fluide d'extrémité (40) pour conduire de la chaleur entre la seconde pluralité de cellules (30) et le circuit de fluide d'extrémité (40).

7. Système (10) de l'une des revendications 1 à 6, comprenant en outre une pluralité de dispositifs d'étanchéité (70) disposés entre la pluralité de cellules (30) et le support de cellules (20).
